Europäisches Patentamt

European Patent Office

Office européen des brevets

(19)

(11) Numéro de publication: **0 251 883**
**A1**

(12) # DEMANDE DE BREVET EUROPEEN

(21) Numéro de dépôt: 87401423.6

(22) Date de dépôt: 22.06.87

(51) Int. Cl.⁴: **F 02 B 41/02**
F 02 B 19/06

(30) Priorité: 30.06.86 FR 8609509

(43) Date de publication de la demande:
**07.01.88 Bulletin 88/01**

(84) Etats contractants désignés: **BE DE FR GB IT**

(71) Demandeur: **INSTITUT FRANCAIS DU PETROLE**
**4, Avenue de Bois-Préau**
**F-92502 Rueil-Malmaison (FR)**

(72) Inventeur: **Trapy, Jean**
**39, rue Crevel Duval**
**F-92500 Rueil-Malmaison (FR)**

(74) Mandataire: **Aubel, Pierre et al**
**Institut Français du Pétrole Département Brevets 4,**
**avenue de Bois Préau**
**F-92502 Rueil-Malmaison (FR)**

(54) **Chambre de combustion auto-modulable et méthode permettant de réduire le volume de gaz résiduels d'un moteur à combustion interne.**

(57) La présente invention concerne une méthode permettant de réduire la quantité de gaz résiduels contenue dans une chambre de combustion d'un moteur à combustion interne, à quatre temps. L'invention concerne également la chambre de combustion elle-même, celle-ci étant délimitée par un cylindre, un piston principal et une culasse.

La chambre de combustion selon la présente invention comporte un piston auxiliaire (5) coulissant dans un cylindre auxiliaire (6) et des moyens (10, 11) adaptés à contrôler la course dudit piston auxiliaire (5) de manière à rendre minimum le volume de ladite chambre de combustion (4) lorsque le piston principal (2) est sensiblement au point mort haut échappement et à rendre maximum ce volume lorsque le piston est au point mort haut compression.

La présente invention est applicable au moteur à quatre temps à allumage commandé à essence.

FIG.2

## Description

## CHAMBRE DE COMBUSTION AUTO-MODULABLE ET METHODE PERMETTANT DE REDUIRE LE VOLUME DE GAZ RESIDUELS D'UN MOTEUR A COMBUSTION INTERNE

La présente invention concerne une chambre de combustion auto-modulable pour un moteur à combustion interne à quatre temps, ainsi qu'une méthode permettant de réduire la quantité de gaz résiduels qu'elle renferme.

L'étude de la combustion du moteur à allumage commandé a révélé sans ambiguïté le rôle néfaste des gaz brûlés résiduels dans le déroulement de la combustion en mélange pauvre homogène, surtout lors de la phase d'initiation. Les gaz résiduels constituent un paramètre important à contrôler, si l'on envisage de faire fonctionner avec une stabilité correcte un moteur en mélange pauvre.

La présente invention permet de réduire la quantité de gaz résiduels présent dans la chambre de combustion. La présente invention utilise des préchambres à volume modulable. Le principe est de minimiser le plus possible le volume du cylindre lorsque le piston atteint le point mort haut désigné dans la suite de ce texte par les initiales P.M.H. échappement, pour ensuite restituer une chambre d'un volume normal au P.M.H. combustion. Cet objectif peut être réalisé au moyen de variations contrôlées du volume d'une préchambre.

Selon un premier mode de réalisation de la présente invention on utilise un piston auxiliaire qui balaye une préchambre de manière à minimiser le volume de cette dernière au P.M.H. échappement, pour cela il est actionné par un système mécanique telle une bielle associée à une manivelle de manière classique, l'arbre d'entraînement de cet ensemble pouvant être l'arbre à came lui-même, ou un arbre tournant à même vitesse que l'arbre à came.

Selon un deuxième mode de réalisation, préféré, le piston auxiliaire est actionné par la pression des gaz dans le cylindre, des moyens élastiques de rappel tels des ressorts ramenant ce piston auxiliaire à son P.M.H. lors des phases basse pression de l'échappement et de l'admission.

L'art antérieur peut être illustré par le brevet suisse CH 539 777 et par le brevet américain US-4.363.295.

Le brevet suisse décrit un dispositif dans lequel une partie de l'énergie de combustion est stockée dans un ressort et dans un coussin de gaz grâce à un piston auxiliaire pour être restituée au vilebrequin à un moment où la bielle et le bras du vilebrequin ne serait en plus dans l'alignement l'un de l'autre de manière à permettre une meilleure restitution de cette énergie.

Ainsi il apparaît clairement que dans ce dispositif antérieur le ressort et le coussin de gaz emmagasinent de l'énergie de combustion et donc que le piston auxiliaire occupe sa position extrême non pas en fin de compression des gaz frais, mais au cours de la combustion et lorsque celle-ci a atteint un bon stade de développement de manière à élever suffisamment la pression dans la chambre de combustion.

Le système décrit dans le brevet US-4.363.295 permet de faire varier le volume de la chambre de combustion en fonction de la charge, mais ne permet pas de faire varier le volume de la chambre pour une même charge et une même position du vilebrequin, suivant que cette position concerne la phase d'échappement ou la phase de compression du cycle.

Ainsi la présente invention concerne une chambre de combustion pour moteur à combustion interne à quatre temps délimitée par un cylindre, un piston principal et une culasse.

Cette chambre de combustion est caractérisée en ce qu'elle comporte un piston auxiliaire coulissant dans un cylindre auxiliaire et des moyens adaptés à contrôler la course dudit piston auxiliaire de manière à rendre minimum le volume de ladite chambre de combustion lorsque le piston principal est sensiblement au point mort haut au cours de la phase d'échappement et de manière que le volume de ladite chambre de combustion soit sensiblement maximum lorsque le piston principal est sensiblement au voisinage du point mort haut au cours de la phase de compression avant la combustion, en tout cas avant que la phase de combustion soit dans son plein développement.

Les moyens de contrôle de la course du piston auxiliaire pourront être des moyens de contrôle mécanique réalisant un couplage mécanique entre ledit piston auxiliaire et ledit piston principal.

Ces moyens mécaniques pourront comporter un système bielle manivelle, ou une came.

Les moyens de contrôle de la course du piston auxiliaire pourront comporter des moyens de rappel élastique et éventuellement des moyens d'amortissement.

La présente invention concerne également une méthode réduisant la quantité de gaz résiduels enfermée dans une chambre de combustion d'un moteur à combustion interne à quatre temps comportant un cylindre principal et un piston principal.

Cette méthode se caractérise en ce que l'on fait varier le volume de la chambre de combustion par le déplacement d'un piston auxiliaire, et en ce que l'on déplace ledit piston auxiliaire de manière à rendre minimum le volume de ladite chambre de combustion lorsque le piston principal est sensiblement au point mort haut au cours de la phase d'échappement et à rendre maximum le volume de ladite chambre de combustion lorsque le piston principal est sensiblement au point mort haut au cours de la phase de compression.

Selon la présente invention on pourra asservir mécaniquement le déplacement dudit piston auxiliaire à celui du piston principal.

Le contrôle du déplacement du piston auxiliaire pourra être réalisé par des moyens de rappel élastique éventuellement associés à des moyens d'amortissement.

Il convient de préciser que la phase de compression peut être définie comme la phase au cours de laquelle la pression dans la chambre de combustion augmente essentiellement du fait de l'action du piston principal et non pas du fait de la combustion.

La présente invention sera mieux comprise et ses avantages apparaitront plus clairement à la description qui suit d'exemples particuliers parmi lesquels :

- la figure 1 représente un premier de réalisation du dispositif selon l'invention,

- la figure 2 illustre un autre mode, préféré, de réalisation du dispositif selon la présente invention,

- les figures 3 à 6 montrent les positions occupées par le piston auxiliaire au cours des différentes phases du cycle du moteur.

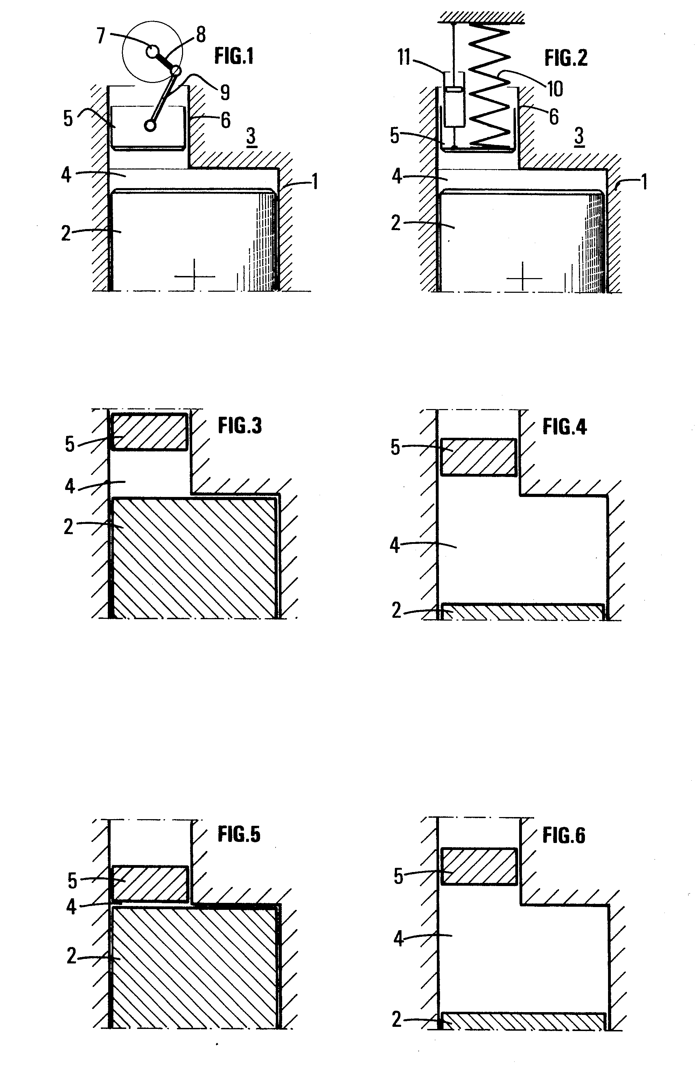

Sur la figure 1 la référence 1 désigne un cylindre d'un moteur à combustion interne, dans lequel coopère un piston 2. Ce piston délimite avec le cylindre 1 et la culasse 3 la chambre de combustion 4.

Selon la présente invention la chambre de combustion 4 comporte un piston auxiliaire 5 qui coopère avec un cylindre auxiliaire 6.

Suivant un premier mode de réalisation le piston auxiliaire 5 est entraîné mécaniquement dans un mouvement alternatif de va-et-vient à une fréquence moitié de celle du piston 2 qui lui-même possède un mouvement de va-et-vient alternatif.

Le mouvement du piston auxiliaire est obtenu, dans le cas de la figure 1 grâce à une liaison mécanique entre le vilebrequin du moteur et l'arbre 7 qui tourne à une vitesse de rotation égale à la moitié de celle du vilebrequin. Cet arbre peut être d'ailleurs l'arbre à came du moteur. De même l'arbre 7 peut être entraîné en rotation, de manière classique, par une chaîne de distribution, un tel système étant bien connu de l'homme de l'art. Cet arbre 7 peut entraîner le piston auxiliaire 5 grâce à une came ou à un système bielle 9-manivelle 8.

Le fonctionnement de ce premier mode de réalisation est indiqué aux figures 3 à 6.

La chaîne cinétique d'entraînement du piston auxiliaire 5, à partir du mouvement du piston 2 ou piston principal, est calée sensiblement de telle manière que lorsque le piston principal 2 est au point mort haut correspondant à la combustion, le piston auxiliaire 5 occupe une position telle qu'il augmente le volume de la chambre de combustion.

En fait le piston auxiliaire 5 est sensiblement à son point mort bas lequel correspond sensiblement à la position la plus haute sur les figures.

La figure 4 représente le piston principal 2 au point mort bas correspondant sensiblement au début de la phase d'échappement. Le piston auxiliaire 5 occupe une position intermédiaire imposée par la chaîne cinétique d'entraînement.

La figure 5 représente le piston 2 à sont point mort haut échappement. Le piston auxiliaire 5 occupe alors une position qui minimise le volume de la chambre de combustion 4. En fait, le piston auxiliaire est à son point mort haut. Ainsi, il apparait clairement sur cette figure que le volume de la chambre de combustion 4 est minimum et que par conséquent la quantité de gaz résiduels qu'elle renferme est également minimum.

En comparant les figures 3 et 5 on s'aperçoit que pour une même position du piston principal 2, le piston auxiliaire 5 peut occuper deux positions différentes : l'une pour laquelle la chambre de combustion 4 a un volume maximum (fig. 3), de manière à renfermer un volume de mélange "carburé" important et l'autre où la chambre de combustion a un volume minimum (fig. 5), de manière à renfermer une faible quantité de gaz résiduels.

La figure 6 représente le piston principal 2 à son point mort bas, le piston auxiliaire 5 occupant une position intermédiaire.

Il est évident que lorsque le piston auxiliaire 5 est entrainé par une came celle-ci permettra de mieux contrôler sa course au cours d'un cycle moteur complet.

Toutefois le fait d'entraîner mécaniquement le piston auxiliaire 5 conduit à un dispositif compliqué, coûteux et qui n'est pas toujours optimisé pour toute la plage de fonctionnement du moteur. En effet, pour une même position du piston principal 2 au cours d'une même phase, le piston auxiliaire 5 occupe toujours une même position, du fait du couplage mécanique de ces deux pistons. Certes il est possible selon la présente invention de modifier le couplage mécanique de ces deux pistons, par exemple en utilisant des systèmes semblables à ceux utilisés pour réaliser une distribution variable et qui sont connus de l'homme de l'art, mais de tels systèmes augmentent encore plus le coût de mise en oeuvre de ce premier mode de réalisation.

Le deuxième mode de réalisation illustré par à la figure 2 ne présente pas les inconvénients exposés précédemment.

Ce deuxième mode de réalisation diffère du premier en ce qu'il n'existe plus de couplage mécanique entre le piston principal 2 et le piston auxiliaire 2. En fait, le mouvement du piston auxiliaire est contrôlé par un système de rappel élastique, en l'occurence un ressort 10, par la différence de pression régnant de part et d'autre du piston auxiliaire 5 et par le poids du cylindre auxiliaire 5. Bien entendu, selon ce deuxième mode de réalisation, on utilise des moyens tels des butées permettant de limiter la course du piston auxiliaire 5. Ces moyens ne sont pas représentés sur les figures.

Des calculs de simulation ont montré que le deuxième mode de réalisation permettait d'améliorer le rendement du moteur. Ces essais ont également montré que le piston auxiliaire pouvait avoir certains mouvements d'oscillation lors de la détente des gaz. L'amplitude de ces oscillations s'est révélée d'autant plus importante que la charge est élevée et le régime faible. Pour cette raison, il peut être intéressant de maintenir la raideur du ressort 10 à un niveau élevé avec de cette manière l'avantage d'améliorer sensiblement le rendement en freinant plus vigoureusement l'accroissement du volume de la chambre lors de la phase de compression.

Cependant le même effet pourrait être obtenu au moyen d'un amortisseur 11 figure 2, en ce qui concerne à la fois l'élimination des oscillations et l'amélioration du rendement. Cette solution présenterait l'avantage de porter au second plan l'importance de la raideur du ressort. Enfin il existe la possibilité d'utiliser les oscillations du piston à la détente pour créer des effets dynamiques favorables au remplissage du moteur.

Le fonctionnement du deuxième mode de réalisation est sensiblement le même que le premier, mais le changement de la position du piston auxiliaire 5 se fait en fonction de la différence de pression de part et d'autre du piston auxiliaire 5, du poids de ce dernier, de la raideur du ressort 10, et éventuellement des caractéristiques de l'amortisseur 11.

Bien entendu, la raideur du ressort 10 est choisie pour que le piston auxiliaire 5 occupe la position minimisant le volume de la chambre de combustion 4 tant que la pression régnant dans la chambre de combustion est sensiblement égale à la pression d'admission.

Bien entendu, la raideur du ressort est telle qu'à la fin de la phase de compression (figure 3), le piston auxiliaire occupe une position pour laquelle le volume de la chambre de combustion est maximum.

La pression régnant de l'autre côté du piston auxiliaire peut être voisine de la pression à l'échappement, ou de la pression régnant dans le circuit de recyclage de l'unité et donc être proche de la pression atmosphérique, notamment dans le cas d'un moteur atmosphérique.

## Revendications

1. - Chambre de combustion pour moteur à combustion interne à quatre temps, délimité par un cylindre, un piston principal et une culasse, caractérisée en ce qu'elle comporte un piston auxiliaire (5) coulissant dans un cylindre auxiliaire (6) et des moyens adaptés à contrôler la course dudit piston auxiliaire (5) de manière à rendre minimum le volume de ladite chambre de combustion (4) lorsque le piston principal (2) est sensiblement au point mort haut au cours de la phase d'échappement (fig. 5) et de manière que le volume de ladite chambre de combustion (4) soit sensiblement au maximum lorsque le piston principal (2) est sensiblement au voisinage du point mort haut au cours de la phase de compression (fig. 3).

2. - Chambre de combustion selon la revendication 1, caractérisée en ce que lesdits moyens de contrôle de la course du piston auxiliaire (5) sont des moyens de contrôle mécanique réalisant un couplage mécanique entre ledit piston auxiliaire (5) et ledit piston principal (2).

3. - Chambre de combustion selon la revendication 2, caractérisée en ce que lesdits moyens de contrôle mécanique comportent un système bielle manivelle.

4. - Chambre de combustion selon la revendication 2, caractérisée en ce que lesdits moyens comportent une came.

5. - Chambre de combustion selon la revendication 1, caractérisée en ce que lesdits moyens de contrôle de la course du piston auxiliaire (5) comportent des moyens de rappel élastique (10).

6. - Chambre de combustion selon la revendication 1, caractérisée en ce que lesdits moyens de contrôle de la course du piston auxiliaire (5) comportent des moyens d'amortissement (11).

7. - Méthode permettant de réduire la quantité de gaz résiduels enfermée dans une chambre de combustion d'un moteur à combustion interne à quatre temps comportant un cylindre principal et un piston principal, caractérisée en ce que l'on fait varier le volume de la chambre de combustion par le déplacement d'un piston auxiliaire, et en ce que l'on déplace ledit piston auxiliaire (5) de manière à rendre minimum le volume de ladite chambre de combustion lorsque le piston principal est sensiblement au point mort haut au cours de la phase d'échappement (fig. 5) et à rendre maximum le volume de ladite chambre de combustion (4) lorsque le piston principal (2) est sensiblement au point mort haut au cours de la phase de compression (fig. 3).

8. - Méthode selon la revendication 7, caractérisée en ce que l'on asservit mécaniquement le déplacement dudit piston auxiliaire (5) à celui du piston principal (2).

9. - Méthode selon la revendication 7, caractérisée en ce que l'on contrôle le déplacement dudit piston auxiliaire par des moyens de rappel élastique.

10. - Méthode selon la revendication 9, caractérisée en ce que l'on associe auxdits moyens de rappel élastique des moyens d'amortissement.

0251883

FIG.1

FIG.2

FIG.3

FIG.4

FIG.5

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,X | CH-A- 539 777 (MÜLLER)<br><br>* En entier * | 1,2,5,<br>7,8,9,<br>10 | F 02 B 41/02<br>F 02 B 19/06 |
| | --- | | |
| X | WO-A-8 402 745 (VAN AVERMAETE)<br><br>* Figures 1,2; pages 5,6 * | 1,2,3,<br>7,8 | |
| | --- | | |
| D,X | US-A-4 363 295 (BRANDLY)<br><br>* Colonne 2, ligne 42 - colonne 3, ligne 41 * | 1,2,4,<br>7,8 | |
| | ----- | | |

**DOMAINES TECHNIQUES RECHERCHES (Int. Cl.4)**

F 02 B

Le présent rapport de recherche a été établi pour toutes les revendications

| Lieu de la recherche | Date d'achèvement de la recherche | Examinateur |
|---|---|---|
| LA HAYE | 15-09-1987 | WASSENAAR G. |